# EUROPÄISCHE PATENTSCHRIFT

(11) **EP 0 711 469 B1**
(45) Veröffentlichungstag und Bekanntmachung des Hinweises auf die Patenterteilung: **03.06.1998**
(21) Anmeldenummer: 94924826.4
(22) Anmeldetag: 29.07.1994
(51) Int. Cl.: H02K 21/12, H02K 1/18, H02K 1/27

(54) **ELEKTRISCHE MASCHINE**
ELECTRICAL MACHINE
MACHINE ELECTRIQUE

(30) Priorität: 31.07.1993 DE 4325740
(43) Veröffentlichungstag der Anmeldung: 15.05.1996
(73) Patentinhaber: Weh, Herbert, Prof. Dr., D-38116 Braunschweig (DE)
(72) Erfinder: Weh, Herbert, Prof. Dr., D-38116 Braunschweig (DE)
(74) Vertreter: Einsel, Martin, Dipl.-Phys.
(86) Internationale Anmeldenummer: EP9402538
(87) Internationale Veröffentlichungsnummer: WO9504399

(56) Entgegenhaltungen:
- DE-A- 2 925 867
- DE-C- 3 915 623

## Beschreibung

Die Erfindung betrifft eine elektrische Maschine
- mit mehreren Wicklungssträngen im Stator in Form von koaxial zur Maschinenachse angeordneten ringförmigen Spulen, die im Motorbetrieb über elektronische Stellelemente gespeist werden,
- mit in Umfangsrichtung angeordneten Folgen von C-förmigen Weicheisenelementen im Stator, die
- untereinander gleichen Abstand aufweisen,
- sich mit ihren Schenkeln quer zu den Wicklungssträngen erstrecken
- und zwischen den Schenkeln nutähnliche Ausnehmungen aufweisen, durch die die Wicklungsstränge verlaufen
- sowie mit einem wicklungslosen Rotor mit mehreren, den einzelnen WicklungsSträngen zugeordneten Teilrotoren, welche Magnetkreiselemente aus Permanentmagneten und flußführenden Weicheisenelemente aufweisen, die in doppelter Anzahl gegenüber dem Stator vorhanden sind und in die nutähnlichen Ausnehmungen eingreifen, wodurch zwischen den Schenkeln der Weicheisenelemente und den Magnetkreiselementen ein erster (innerer) und ein zweiter (äußerer) Luftspalt entsteht.

Transversalflußmaschinen weisen im Vergleich zu anderen Maschinenbauformen sehr hohe Kraftdichten auf. Durch die besondere Art der magnetischen Kreise lassen sich bei niedrigen Wicklungsverlusten und geringem Materialaufwand elektrische Maschinen in kompakter Form mit günstigen Betriebsdaten verwirklichen. Für den Aufbau von Läufer und Stator wurden bereits zahlreiche Vorschläge gemacht. Die im Läufer angeordneten Permanentmagnete werden zweckmäßig mit Weicheisen so umgeben, daß in den am Luftspalt angrenzenden Polflächen höhere Felddichten auftreten als im Magnetbereich. Mit solchen Sammleranordnungen werden sowohl höhere Kraftdichten als auch zweckmäßige Voraussetzungen zum Betrieb der Maschine am Frequenzumrichter erzielt. Im Zusammenhang mit den auf die Einzelelemente des Läufers wirkenden Fliehkräften eng verbunden sind die konstruktiven Fragen des Läuferaufbaus.

Sie haben Einfluß auf die Gestaltung der gesamten Maschine und bestimmen die Einsatzmöglichkeiten, insbesondere bei höheren Umfangsgeschwindigkeiten.

Die erzielbare Kraftdichte und die für die thermische Belastung wichtigen Wicklungsverluste hängen außer vom Läuferaufbau auch von der erzielbaren magnetischen Leitfähigkeit der Polelemente des Stators ab. Es ist erwünscht, über die in den bisherigen Vorschlägen wie insbesondere in der DE 41 38 014 C1 und der DE 39 15 623 C1 zum Ausdruck kommenden Möglichkeiten hinaus weitere Verbesserungen durch die Auslegung der magnetischen Kreise zu erzielen. Dieses sollte zu einer günstigeren Relation zwischen Kraftdichte und Wicklungsdurchflutung sowie zu einer Verringerung der Eisenverluste und zugleich auch zur Verbesserung des Schwingungsverhaltens führen. Aus der Sicht der möglichen Anwendung stehen diese Zielsetzungen in Verbindung mit der Verwirklichung hoher Läufer-Umfangsgeschwindigkeiten, die gleichzeitig auf hohe Betriebsfrequenzen führen. Transversalflußmaschinen für Fahrzeugantriebe ohne die Anwendung von Schaltgetrieben sind typische Betriebsvoraussetzungen. Es ist einleuchtend, daß hierbei auch die Frage einer stoßfesten Rotorausführung eine Rolle spielt.

Aufgabe der Erfindung ist es daher, eine wirtschaftlich baubare Transversalflußmaschine aufzuzeigen, deren zum Magnetkreis gehörige Läufer und Statorelemente bei kleinem Wicklungsquerschnitt und Maschinenvolumen in Bezug zur Krafterzeugung eine hohe Wirksamkeit besitzen und hinsichtlich der mechanischen Betriebsbedingungen (wie hohe Umfangsgeschwindigkeit des Läufers und geringe Schwingungsempfindlichkeit der Statorelemente) gut geeignet sind.

Diese Aufgabe wird dadurch gelöst, daß das Weicheisenelement einen auf die Magnetkreiselemente gerichteten (inneren) Polansatz am ersten (inneren) Luftspalt und innerhalb einer doppelten Polteilung beabstandet einen weiteren ersten und zweiten auf die Magnetkreiselemente gerichteten (äußeren) Polansatz am zweiten (äußeren) Luftspalt aufweist, so daß das Weicheisenelement einer Umfangslänge der doppelten Polteilung entspricht und auf einem größeren Teil seiner Elementlänge einen vergrößerten Querschnitt gegenüber demjenigen der Polansätze aufweist.

Die Maschine ist dabei aus mehreren strangweise gleichartigen Einheiten aufgebaut, die mit dem Drehstromprinzip entsprechenden phasenverschobenen Strömen betrieben werden.

Auslegung und Betriebsverhalten von Transversalflußmaschinen werden erfindungsgemäß durch eine günstigere Querschnittsgestaltung der flußführenden Elemente und der die Erregung bestimmenden Permanentmagnete verbessert. Es entstehen Kraftdichteerhöhung bei reduzierten Eisenverlusten bzw. die Möglichkeit, höhere Umfangsgeschwindigkeiten auszuführen. Hierzu werden auch Vorschläge für eine verbesserte Fliehkraftabstützung der das magnetische Feld führenden Elemente des Rotors gemacht. Die vorgeschlagene Querschnittsgestaltung für die Stator-Polelemente führt auch zu einer Verringerung der Auswirkungen der Normalkraftanregung.

Ausgangspunkt für die Lösung der gestellten Aufgabe ist die Beibehaltung des transversalen Flußführungs-Prinzips. Die zu einzelnen (ringförmigen) Wicklungen gehörigen Maschineneinheiten sind als geometrisch ähnlich und als magnetisch unabhängig zu betrachten; ihre Läufereinheiten sind einer gemeinsamen Läuferstruktur zugeordnet. In ihr addieren sich die einzelnen Kraftanteile. Die Statoreinheiten sind jeweils aus einer Vielzahl gleichartiger flußführender Weicheisenelemente aufgebaut. Sie umgeben die Ringwicklung und werden in einen Elementträger (der auch aus mehreren Teilen bestehen kann) integriert und mit diesem verbunden. Im Stand der Technik wurden Möglichkeiten für die Aufteilung der Stator- und Läufer-Elemente beschrieben, die hohe Kraftwirkungen ermöglichen. Zahl und Art der Magnetkreisunterteilungen bestimmen die erzielbare Kraftwirkung je Magnetkreis. Die dem einzelnen Kreis zugeordnete Wicklungsdurchflutung steigt mit der Zahl der Luftspalte, wenn die Kraftdichte zum Luftspalt konstant gehalten werden soll. Die Eignung der Läuferbauform für hohe Umfangsgeschwindigkeiten ergibt sich aus der Art der Aufnahme der Fliehkraftbeanspruchung für die magnetisch wirksamen Teile durch die umgebende Läuferstruktur. Mit den hohen Umfangsgeschwindigkeiten im Zusammenhang steht auch die Frage der besonders in den Stator-Polelementen auftretenden Eisenverluste. Sie sind stark frequenzabhängig und begrenzen neben der Fliehkraftbeanspruchung ebenfalls die Anwendung der Maschinen für hohe Umfangsgeschwindigkeiten.

Weiter wurden auch Vorschläge über eine wirtschaftlich baubare Transversalflußmaschine mit C-förmigen radial gestellten Polelementen im Stator und einer einbahnigen Ausführung des Läufers mit schräggestellten Permanentmagneten gemacht, wobei die günstige Baubarkeit und die elektromagnetisch zweckmäßige Konfiguration hervorgehoben wurden. Für die Erzielung hoher Umfangsgeschwindigkeiten wie auch geringer Schwingungsauslenkungen der C-förmigen Elemente durch Normalkraft-Pulsationen bestehen hierbei ebenfalls gute Voraussetzungen. Um allerdings sehr hohe Kraftdichten realisieren zu können, und gleichzeitig bei hohen Frequenzen den Anstieg der Eisenverluste zu begrenzen, sind weitere wirksame Maßnahmen erforderlich. Die einbahnige Rotorausführung mit geringer Ausdehnung bringt dabei für das magnetische Matenal den Vorteil der direkten Krafteinleitung in die benachbarte Läuferscheibe, die in der Mitte zwischen zwei geometrisch ähnlichen Maschineneinheiten angeordnet ist. Es werden so unzulässige Dehnungen mit entsprechenden Luftspaltunsymmetrien vermieden bzw. stark begrenzt; der Läufer ist verhältnismäßig stoßfest aufgebaut.

Im Vergleich zu Magnetkreisen mit rein axial verlaufenden Feldkomponenten und senkrechter Schnittebene zwischen Stator und Läufer weisen Magnetkreise mit zylindrisch verlaufenden Schnittflächen auch bei symmetrischer Feldverteilung (an innerer und äußerer Luftspaltfläche) Normalkraftanregungen auf, die für den Stator Schwingungsauslenkungen ergeben. Beim Rotor hingegen kann davon ausgegangen werden, daß an äußerer und innerer Begrenzung etwa gleichgroße Kraftanteile wirken und somit die Differenzkraft verschwindend klein ist. Es ist auch offensichtlich, daß die Bauform mit doppelter Magnetspur und einem geteilten magnetischen Kreis im Stator gegenüber der C-förmigen Anordnung der Polelemente und einbahniger Magnetanordnung im Läufer bezüglich der Auswirkungen der Normalkraftanregung ungünstigere Voraussetzungen aufweist.

Die C-förmige Polelementform birgt durch ihre vertikale Verbindung der beiden Schenkel ein höheres Maß an Eigensteifigkeit, als normalerweise durch Einbaumaßnahmen bei einer zweigeteilten Anordnung der Polelemente (beim zweibahnigen Läufer) erreicht werden kann. Die Eigenfrequenz der ersten Schwingungsform für vertikale Anregungen liegt demgemäß bei C-förmigen Polelementen oberhalb von 1 kHz.

Anhand der nachfolgenden Beschreibung und der Zeichnungen wird die Erfindung näher erläutert. Es zeigen:

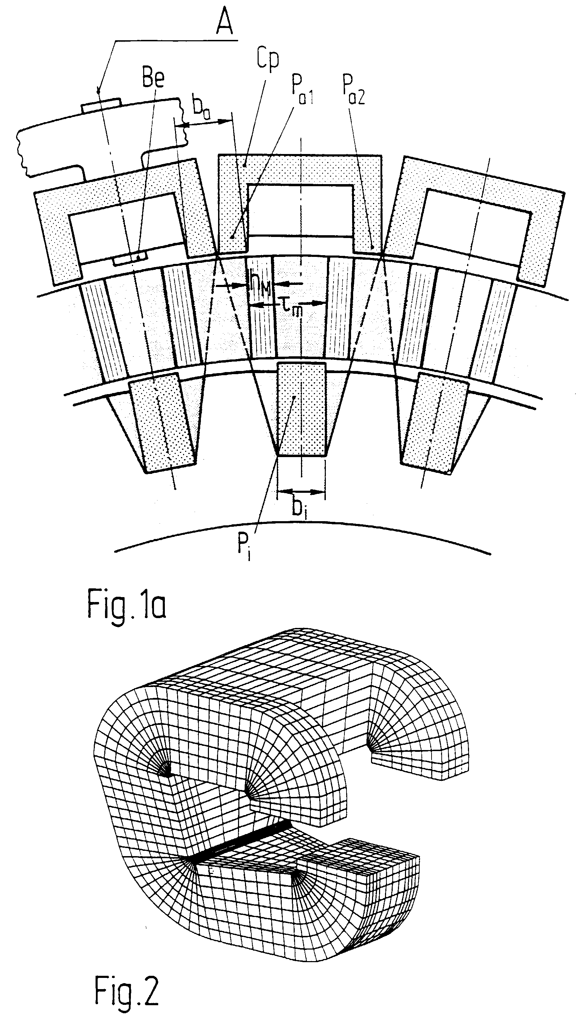

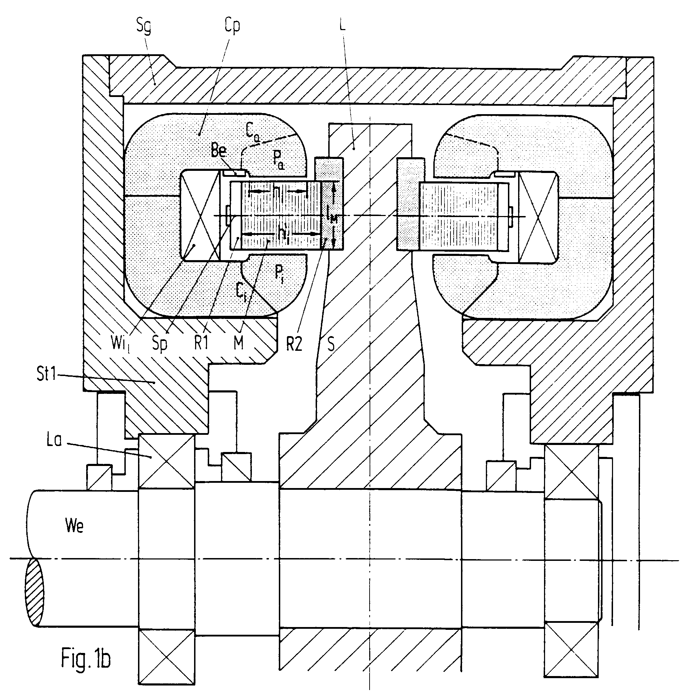

- Fig. 1 a:: einen Ausschnitt aus der Seitenansicht einer Transversalflußmaschine mit Permanentmagneten und neuer Polelementform;
- Fig. 1 b:: einen Längsschnitt einer Transversalflußmaschine mit vergrößertem Magnetquerschnitt im Rotor und C-förmigen Polelementen im Stator;
- Fig. 2:: eine perspektivische Darstellung des Stator-Polelements mit erweitertem Querschnitt (Durchmesser unendlich);
- Fig. 3:: eine Ansicht bzw. einen Ausschnitt aus der Anordnung von Permanentmagneten und Weicheisenteilen einer Magnetbahn des Rotors mit Abstützung der Fliehkräfte durch formschlüssige Verbindung mit Faserringen;
- Fig. 4:: ein Beispiel einer Anordnung von Rotor- und Statoreinheiten bei einer viersträngigen Transversalflußmaschine.

Am Beispiel einer zweisträngigen Transversalflußmaschine zeigen die Fig. 1a und 1b, daß Verbesserungen im elektromagnetischen und im mechanischen Verhalten der Maschinenauslegung und dem Betriebsverhalten zugute kommen.

Fig. 1a zeigt aus der Reihe gleichartiger Polelemente des Stators und der Magnetanordnung des Rotors einen Ausschnitt.

In Fig. 1b ist die darauf senkrechte Ansicht der Maschine (im Schnitt) dargestellt. Die zwei Hälften sind geometrisch ähnlich gestaltet. Gegenüber der linken Seite ist die rechte Hälfte um eine halbe Polteilung versetzt angeordnet. Der Läufer ist je Maschinenseite einbahnig, d.h. mit nur einer Reihe von Permanentmagneten und Weicheisenelementen ausgestattet.

Die magnetisch aktiven Bauteile M des Läufers sind seitlich von zwei nichtmagnetischen Halteringen R1 und R2 begrenzt. Letztere bestehen normalerweise aus hochfestem Fasermaterial. Durch die Spannelemente (Gewindebolzen) Sp werden Ringe und Magnetmaterial in axialer Richtung gegenüber einer Trägerscheibe S festgespannt. Es ist somit eine Einleitung der Umfangs- und Fliehkräfte über R2 auf die Rotorscheibe S gewährleistet. Die Umfangskräfte werden dann weiter über eine Welle We übertragen. Letztere stützt sich über Wälzlager La gegenüber dem Statorteil St1 ab. In diesem Statorelement sind Weicheisenteile bzw. Polelemente Cp mit gleichen Abständen in einem entsprechend gezahnt ausgeformten Gehäusekörper angeordnet und gegen Verdrehung gesichert. Die Polelemente Cp umfassen eine in Umfangsrichtung verlaufende, konzentrisch zur Welle liegende Wicklung Wi. Sie wird durch Wechselströme gespeist. Die Ausdehnung der Polelemente beträgt am Außenumfang die doppelte Polteilung des Rotors, sie reduziert sich auf der Innenseite auf die Breite eines Weicheisenteils (des Rotors). Es gilt weiter, daß die Ausdehnung der beiden äußeren Polansätze Pₐ₁ und Pₐ₂ etwa gleich jener des inneren Polansatzes Pᵢ ist.

Die erwähnten Verbesserungen, die das elektromagnetische Verhalten betreffen, sind für den Läufer daran erkennbar, daß ein erweiterter Magnetquerschnitt zur Verfügung steht. Die entsprechende axiale Abmessung der Läufer-Magnetquerschnitte ist in der Abmessung h'ᵢ erkennbar, die größer ist als die entsprechende axiale Ausdehnung der Statorpolelementfläche mit der Abmessung hᵢ. Die Vergrößerung kann bis zu 50% betragen. Sie erhöht den Sammelfaktor und trägt gleichzeitig zur Entlastung des Läuferanteils des magnetischen Kreises gegenüber Sättigung als Folge größerer Statorströme bei.

Eine weitere insbesondere in Fig. 1a erkennbare Optimierung ergibt sich aus der gewählten Form der Statorpolelemente Cp. Sie sind so gestaltet, daß auf dem größten Teil der Elementlänge zwischen den Polflächen Pₐ und Pᵢ eine Querschnittsvergrößerung vorliegt. Die Aufteilung der Polfläche Pₐ auf dem äußeren Umfang in Pₐ₁ und Pₐ₂ ergibt sich aus der herstellungsbedingten Lösung, jedes Polelement als Schnittbandprodukt zu fertigen, d.h. aus dünnen Blechbändern durch Aufwickeln auf einen Kern herzustellen. Die gewählte Formgebung kann dann durch anschließende Schnittbearbeitung (z.B. durch Fräsen) erfolgen. In den Zeichnungen Fig. 1a und 1b ist erkennbar, daß gegenüber den in den bisherigen Vorschlägen vorgesehenen Elementen mit konstanten Querschnitten bemerkenswerte Querschnittsvergrößerungen auf dem größten Teil der Elementlänge zwischen den in Fig. 1b gezeichneten Konturlinien Cₐ und Cᵢ vorgesehen sind. Nur in den Bereichen nahe dem Luftspalt wurden zur Einhaltung der gewünschten Feldverteilung die Umfangsabmessungen der Polelemente jeweils auf den Wert limitiert, der auch für die angrenzenden Abmessungen der Läufer-Weicheisenelemente gelten. Die Querschnittserweiterung der Polelemente dient wie erwähnt der Erzielung einer verbesserten magnetischen Leitfähigkeit und gleichzeitig einer Erhöhung der mechanischen Steifigkeit, insbesondere gegenüber Normalkraftanregungen. In radialer Richtung werden die Elementabmessungen beibehalten. Sie entsprechen der Abmessung hᵢ.

Als Ergebnis der Verbesserung der magnetischen Leitfähigkeit in Stator und Rotor entsteht eine Erhöhung der Kraftdichte bei gegebenem Strom der Wicklung. Bei gleichen Wicklungsverlusten werden somit erhöhte Umfangskräfte (größeres Drehmoment) erzielt.

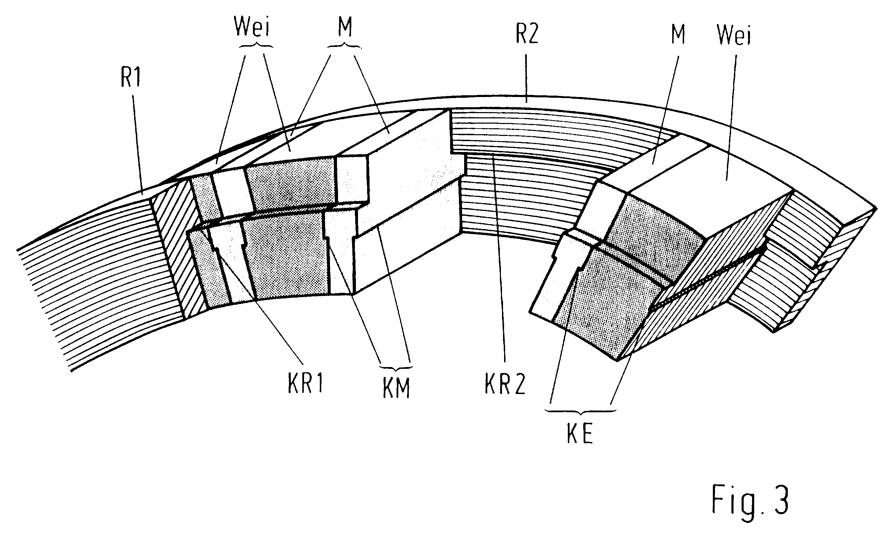

Weiter kann davon ausgegangen werden, daß bei gegebenen Felddichten im Bereich des Luftspaltes die für die Eisenverluste wirksame Felddichte in Läufer und Statorweicheisen reduziert sind. Es entstehen somit geringere Eisenverluste bei gegebener Frequenz. Da die Maschine aufgrund günstiger Rotorbauform (siehe Fig. 3) in der Lage ist, hohe Umfangsgeschwindigkeiten zuzulassen, lassen sich bei gleicher Polteilung auch erhöhte Frequenzen ausführen, ohne daß es zu unzulässigen Erwärmungen der Eisenelemente kommt. Die Maschine läßt sich somit sowohl mit erhöhter Kraftdichte als auch mit durch Kraft- und Geschwindigkeitssteigerungen bedingter erhöhter Leistungsdichte ausführen.

Weiter sei auf die durch die Querschnittsvergrößerung der Stator-Weicheisenelemente erzielte höhere Eigensteifigkeit dieser Elemente hingewiesen. Durch sie wird eine Reduktion der durch die Normalkraftschwankungen verursachte Schwingungsauslenkung der Schenkel der C-förmigen Polelemente erzielt. Die Erhöhung der Eigenfrequenz kann dazu führen, daß diese oberhalb der Anregung liegt und die von den Elementen abgestrahlte Schallenergie deutlich geringer ist als bei nicht versteiften Elementen.

In Fig. 1a und 1b ist auf die Möglichkeit hingewiesen, die C-förmigen Polelemente im Konstruktionsteil St1 an einer gezahnt ausgeführten Haltestruktur, z.B. durch Klebeverbindung zu befestigen. Diese Art der Befestigung führt zu einer insgesamt raumsparenden Anordnung im Längsschnitt.

In Fig. 1a ist links als Alternative bzw. Variante bei "A" hierzu eine zusätzliche Befestigungsmöglichkeit für die Polelemente mit einer durch Be gekennzeichneten Schraubverbindung und einem Gehäuseteil Ge dargestellt. Diese Befestigung kann zusätzlich zu der erwähnten Verbindung mit einem gezahnt ausgeführten Konstruktionsteil erfolgen. Die Schraubverbindung hat dem Gesichtspunkt Rechnung zu tragen, daß möglichst wenig zusätzliche Wirbelstromverluste entstehen.

Die sich als zweckmäßig ergebende Form der Stator-Polelemente ist perspektivisch in Fig. 2 wiedergegeben. Dort ist zur Vereinfachung der zeichnerischen Darstellung die Rotorkrümmung vernachlässigt (Durchmesser unendlich groß). Die Konturflächen Ca und Ci sind hierbei zur Vereinfachung (vertikal) angenommen.

Der erfindungsgemäße Vorschlag der Verbreiterung der als Schnittbandprodukt hergestellten Stator-Polelemente auf den Wert der doppelten Polteilung läßt sich sinngemäß auch bei der Konfiguration der zweibahnigen Rotoranordnung anwenden. Die Stator-Polelemente sind dabei in innere und äußere Einheiten getrennt ausgeführt und mit Haltevorrichtungen verbunden. Auch hierbei ergeben sich sowohl Vorteile in elektromagnetischer Hinsicht als auch Verbesserungen der mechanischen Steifigkeit.

Durch beidseitige Abstützungskanten an Magnetmaterial und Faserringen kann entsprechend Fig. 3 die Übertragung der Fliehkräfte des Magnetmaterials gegenüber der in Fig. 1b gezeichneten Anordnung weiter verbessert werden. Die nach außen gerichteten Fliehkräfte werden durch formschlüssige Gestaltung über die Kanten KR1 und KR2 in die Ringe R1 und R2 eingeleitet. Da der Anteil des Faserquerschnitts verhältnismäßig hoch gewählt werden kann, lassen sich ohne unzulässige Dehnungen (in radialer Richtung) hohe Umfangsgeschwindigkeiten bis über 50 m/s erzielen. Die Weicheisenteile sind dabei aus lamelliertem Blech, z.B. durch Stanzung erzeugt, wobei die Blechebene senkrecht zur Achsrichtung steht. Da das Material moderner Hochenergie-Permanentmagnete (etwa Nd Fe B) eine verhältnismäßig hohe Biegefestigkeit aufweist, übernehmen die Permanentmagnete auch die Aufgabe der Kraftübertragung an die Ringe.

Für hohe Umfangsgeschwindigkeiten ist weiter die Ausbildung von Stützkanten KM bzw. KE in axialer Richtung vorgesehen. Diese Kanten verbessem die Übertragung der Fliehkräfte der Weicheisenelemente Wei.

Eine Schrägstellung der in Umfangsrichtung verlaufenden Kanten KR1 und KR2 führt dazu, daß bei axialer Verspannung über die entsprechend geformten Spannringe R1 und R2 eine radial nach innen gerichtete Vorspannung (eine Art Gewölbedruck) erzeugt wird. Hierdurch wird erreicht, daß eventuelle Klebeverbindungen zwischen den Teilen Wei und M bei hohen Umfangsgeschwindigkeiten weniger (auf Zug) beansprucht werden.

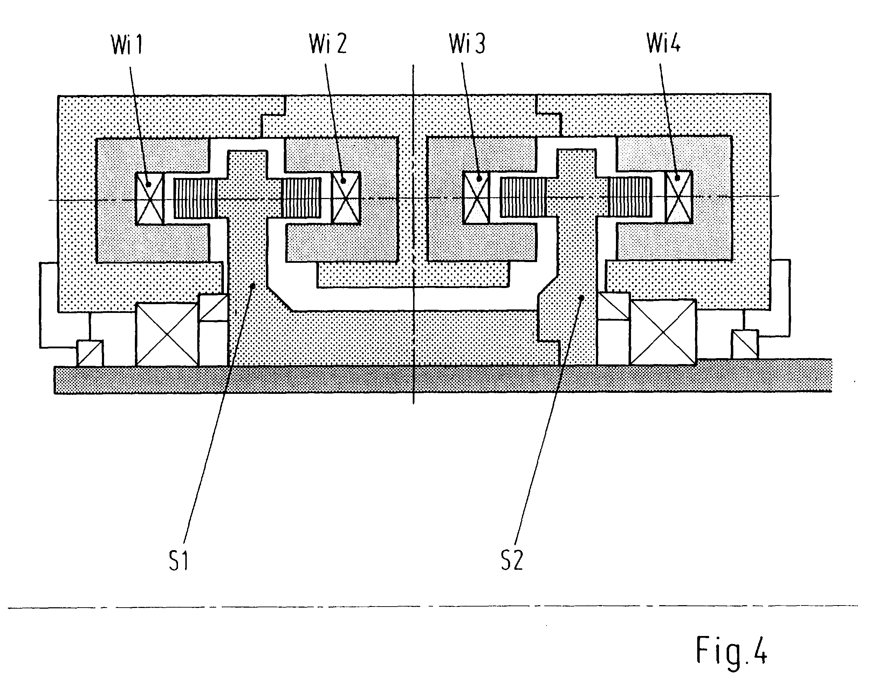

In Fig. 4 ist eine Transversalflußmaschine mit den erfindungsgemäßen Merkmalen und vier Wicklungssträngen bzw. vier Teilmaschinen zeichnerisch vereinfacht dargestellt. Die beiden Teilrotoren S1 und S2 sind mit einer gemeinsamen Nabe ausgeführt und übertragen das resultierende Drehmoment auf eine Hohlwelle. Durch die gewählte Stator-/Rotoranordnung und die hohe Kraftdichte wird ein verhältnismäßig großer innerer Freiraum (großer Hohlwellen-Durchmesser) erzielt.

Die vier Statoren sind in drei Gehäuseteilen angeordnet bzw. befestigt.

## Patentansprüche

1. Elektrische Maschine
- mit mehreren Wicklungssträngen (Wi, Wi1, Wi2, Wi3, Wi4) im Stator in Form von koaxial zur Maschinenachse angeordneten ringförmigen Spulen, die im Motorbetrieb über elektronische Stellelemente gespeist werden,
- mit in Umfangsrichtung angeordneten Folgen von C-förmigen Weicheisenelementen (Cp) im Stator, die
- untereinander gleichen Abstand aufweisen,
- sich mit ihren Schenkeln quer zu den Wicklungssträngen (Wi, Wi1, Wi2, Wi3, Wi4,) erstrecken
- und zwischen den Schenkeln nutähnliche Ausnehmungen aufweisen, durch die die Wicklungsstränge verlaufen
- sowie mit einem wicklungslosen Rotor mit mehreren, den einzelnen Wicklungssträngen zugeordneten Teilrotoren (S1, S2), welche Magnetkreiselemente (Wei, M) aus Permanentmagneten (M) und flußführenden Weicheisenelementen (Wei) aufweisen, die in doppelter Anzahl gegenüber dem Stator vorhanden sind und in die nutähnlichen Ausnehmungen eingreifen, wodurch zwischen den Schenkeln der Weicheisenelemente (Cp) und den Magnetkreiselementen (Wei, M) ein erster, innerer und ein zweiter, äußerer Luftspalt entsteht,
**dadurch gekennzeichnet,**
**daß** das Weicheisenelement (Cp) einen auf die Magnetkreiselemente(Wei,M) gerichteten, inneren Polansatz (Pᵢ) am ersten, inneren Luftspalt und innerhalb einer doppelten Polteilung beabstandet einen weiteren ersten (Pₐ₁) und zweiten (Pₐ₂) auf die Magnetkreiselemente (Wei, M) gerichteten, äußeren Polansatz (Pₐ) am zweiten, äußeren Luftspalt aufweist, so daß das Weicheisenelement (Cp) einer Umfangslänge der doppelten Polteilung entspricht und auf einem größeren Teil seiner Elementlänge einen vergrößerten Querschnitt gegenüber demjenigen der Polansätze (Pₐ,Pᵢ) aufweist.

2. Elektrische Maschine nach Anspruch 1,
**dadurch gekennzeichnet,**
daß die axiale Länge (h'ᵢ) der Magnetkreiselemente (Wei, M) um mehr als 10% größer ist als die entsprechende Ausdehnung (hᵢ) der Polansätze (Pₐ, Pᵢ).

3. Elektrische Maschine nach Anspruch 1 oder 2
**dadurch gekennzeichnet,**
**daß** das Weicheisenelement (Cp) nach innen konisch verläuft bzw. innen schmaler ist und daß die Weicheisenelemente (Cp) in einem entsprechend gezahnt ausgeformten Tragkörper oder Statorteil (St1) befestigt sind.

4. Elektrische Maschine nach einem der Ansprüche 1 bis 3,
**dadurch gekennzeichnet,**
**daß** die Weicheisenelemente (Cp) im Bereich zwischen den äußeren Polansätzen (Pₐ) Befestigungsbohrungen (Be) zur Aufnahme von entsprechenden Schraubverbindungen aufweisen.

5. Elektrische Maschine nach einem der Ansprüche 1 bis 4,
**dadurch gekennzeichnet,**
**daß** mindestens ein nichtmagnetischer Preßring (R2) des Rotors mit einer Stützkante (KR2) ausgeführt ist.

6. Elektrische Maschine nach Anspruch 5,
**dadurch gekennzeichnet,**
**daß** der Preßring (R2), die Magnete (M) und die Weicheisenelemente (Wei) Stützkanten (KR2, KM, KE) aufweisen (Fig. 3) oder an ihren Verbindungsstellen konisch ausgeführt sind.

## Claims

1. An electrical machine
- comprising a plurality of winding phases (W, Wi1, Wi2, Wi3, Wi4) in the stator in the form of annular coils arranged coaxially with the machine spindle and supplied by electronic control elements in motor operation,
- with sequences of C-shaped soft iron elements (Cp) arranged in a peripheral direction in the stator, which elements
- are equal distances apart,
- have their limbs extending transversely of the winding phases (W, Wi1, Wi2, Wi3, Wi4)
- and have groove-like recesses between the limbs, through which the winding phases run,
- and further comprising a rotor without windings but having a plurality of part-rotors (S1, S2) associated with the individual winding phases and having magnetic circuit elements (Wei, M) in the form of permanent magnets (M) and flux-carrying soft iron elements (Wei) which are twice the number on the stator and which engage in the groove-like recesses, thereby forming a first, intemal air gap and a second, extemal air gap between the limbs of the soft iron elements (Cp) and the magnetic circuit elements (Wei, M),
characterised in that
the soft iron element (Cp) has an intemal pole piece (Pi), directed towards the magnetic circuit elements (Wei, M), at the first, intemal air gap and, spaced within twice the pole pitch, a further first (Pa1) and second (Pa2) external pole piece (Pa), directed towards the magnetic circuit elements (Wei, M), at the second, external air gap, so that the soft iron element (Cp) corresponds to a peripheral length of twice the pole pitch and has an enlarged cross section compared to that of the pole pieces (Pa, Pi) over the greater part of its length.

2. An electrical machine according to claim 1,
characterised in that
the axial length (h'i) of the magnetic circuit elements (Wei, M) is more than 10% larger than the corresponding dimension (hi) of the pole pieces (Pa, Pi).

3. An electrical machine according to claim 1 or 2,
characterised in that
the soft iron element (Cp) tapers inwardly and/or is narrower internally, and that the soft iron elements (Cp) are fixed in an appropriately toothed supporting member or stator member (St1).

4. An electrical machine according to any of claims 1 to 3,
characterised in that
the soft iron elements (Cp) have attachment holes (Be) to receive corresponding screw connections in the region between the extemal pole pieces (Pa).

5. An electrical machine according to any of claims 1 to 4,
characterised in that
at least one non-magnetic wraparound ring (R2) of the rotor is made with a supporting edge (KR2).

6. An electrical machine according to claim 5,
characterised in that
the wraparound ring (R2), magnets (M) and soft iron elements (Wei) have supporting edges (KR2, KM, KE) (Fig. 3) or are tapered at their coupling points.

## Revendications

1. Machine électrique
- comportant plusieurs brins d'enroulement (Wi, Wi1, Wi2, Wi3, Wi4) dans le stator, sous la forme de bobines à forme annulaire, disposées coaxialement par rapport à l'axe machine et alimentées par l'intermédiaire d'éléments de réglage électroniques, pendant que le moteur est en fonctionnement,
- comportant des successions, disposées dans la direction périphériques, d'éléments en fer doux (Cp) à forme en C, disposés dans le stator, qui
- présentent un espacement égal les uns par rapport aux autres,
- s'étendent par leurs branches transversalement par rapport aux brins d'enroulement (Wi, Wi1, Wi2, Wi3, Wi4)
- et présentent entre les branches des évidements analogues à des rainures, à travers lesquels les brins d'enroulement s'étendent,
- ainsi qu'avec un rotor sans enroulement, comportant plusieurs rotors partiels (S1, S2), associés aux différents brins d'enroulement, rotors partiels qui présentent des éléments de circuit magnétique (Wei, M) constitués d'aimants permanents (M) et d'éléments en fer doux (Wei) assurant le guidage du flux, prévus en un nombre correspondant au double par rapport au stator et s'engageant dans les évidements du genre de rainures, faisant qu'entre les branches des éléments en fer doux (Cp) et les éléments de circuit magnétique (Wei, M) sont constitués un premier entrefer, intérieur, et un deuxième entrefer, extérieur,
caractérisée en ce que
l'élément en fer doux (Cp) présente un appendice polaire intérieur (Pi), tourné vers les éléments de circuit magnétique (Wei, M), sur le premier entrefer intérieur, et, dans les limites d'une distance qui est du double de la division des pôles, sur le deuxième entrefer extérieur, un appendice polaire extérieur (Pa), constitué d'un premier appendice polaire (Pa1) et d'un deuxième appendice polaire extérieur (Pa2) supplémentaires, tournés vers les éléments de circuit magnétique (Wei, M), de manière que l'élément en fer doux (Cp) soit d'une longueur périphérique correspondant au double de la division des pôles et présente, sur une grande parie de sa longueur d'élément, une section transversale agrandie par rapport à celle des appendices polaires (Pa, Pi).

2. Machine électrique selon la revendication 1, caractérisée en ce que la longueur axiale (h'₁) des éléments de circuit magnétique (Wei, M) est supérieure, de plus de 10 %, à l'étendue (hᵢ) correspondante des appendices polaires (Pₐ, Pᵢ).

3. Machine électrique selon la revendication 1 ou 2, caractérisée en ce que l'élément en fer doux (Cp) s'étend suivant une allure conique en allant vers l'intérieur, respectivement est plus étroit à l'intérieur, et en ce que les éléments en fer doux (Cp) sont fixés dans un corps support ou une partie stator (St1), comportant des creusements dentés correspondants.

4. Machine électrique selon l'une des revendications 1 à 3, caractérisé en ce que les éléments en fer doux (Cp) présentent, dans la zone située entre les appendices polaires extérieurs (Pa) des perçages de fixation (Be) destinés à recevoir des liaisons vissées correspondantes.

5. Machine électrique selon l'une des revendications 1 à 4, caractérisé en ce qu'au moins un anneau de pressage (R2) non magnétique du rotor est réalisé avec une arête d'appui (KR2).

6. Machine électrique selon la revendication 5, caractérisée en ce que l'anneau de pressage (R2), les aimants (M) et les éléments en fer doux (Wei) présentent des arêtes d'appui (KR2, KM, KE) (figure 3) ou sont réalisés suivant une configuration conique à leurs points de liaison.
